(19) Europäisches Patentamt
European Patent Office
Office européen des brevets

(11) EP 1 036 801 A2

# (12) EUROPÄISCHE PATENTANMELDUNG

(43) Veröffentlichungstag:
**20.09.2000 Patentblatt 2000/38**

(51) Int. Cl.[7]: **C08F 10/00**

(21) Anmeldenummer: **00103228.3**

(22) Anmeldetag: **17.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.03.1999 DE 19912011**

(71) Anmelder: **TARGOR GmbH**
**55116 Mainz (DE)**

(72) Erfinder:
- **Bidell, Wolfgang, Dr.**
  **67112 Mutterstadt (DE)**
- **Hingmann, Roland, Dr.**
  **68526 Ladenburg (DE)**
- **Langhauser, Franz, Dr.**
  **67152 Ruppertsberg (DE)**
- **Kersting, Meinolf, Dr.**
  **67435 Neustadt (DE)**
- **Werner, Rainer Alexander, Dr.**
  **67098 Bad Dürkheim (DE)**

(74) Vertreter: **Stark, Vera, Dr.**
**BASF Aktiengesellschaft**
**Patente, Marken und Lizenzen**
**67056 Ludwigshafen (DE)**

## (54) Verfahren zur Gasphasenpolymerisation von C2-C8-Alk-1-enen

(57) Verfahren zur Polymerisation von $C_2$-$C_8$-Alk-1-enen mittels eines Ziegler-Natta-Katalysatorsystems, wobei aus der Gasphase heraus in wenigstens einer Reaktionszone bei Temperaturen von 40 bis 120°C und Drücken von 1 bis 100 bar polymerisiert wird, dadurch gekennzeichnet, daß Druck und Temperatur in der Reaktionszone so eingestellt werden, daß ein aus diesen Parametern gebildeter Betriebspunkt in einem Druck-Temperatur-Diagramm sich im Abstand von 0,2 bis 5,0 bar unterhalb der Taulinie des jeweiligen Reaktionsgemisches befindet, ab der eine Kondensation der $C_2$-$C_8$-Alk-1-ene eintritt.

EP 1 036 801 A2

**Beschreibung**

Die vorliegende Erfindung betrifft ein Verfahren zur Polymerisation von $C_2$-$C_8$-Alk-1-enen mittels eines Ziegler-Natta-Katalysatorsystems, wobei aus der Gasphase heraus in wenigstens einer Reaktionszone bei Temperaturen von 40 bis 120°C und Drücken von 1 bis 100 bar polymerisiert wird.

Polymerisate von $C_2$-$C_8$-Alk-1-enen können sowohl durch Flüssigphasenpolymerisation als auch durch Polymerisation in einer Aufschlämmung oder durch Gasphasenpolymerisation hergestellt werden. Da sich das entstehende feste Polymerisat leicht vom gasförmigen Reaktionsgemisch abtrennen läßt, wird in zunehmendem Maß aus der Gasphase heraus polymerisiert. Die Polymerisation wird dabei mit Hilfe eines Ziegler-Natta-Katalysatorsystems durchgeführt, welches üblicherweise aus einer titanhaltigen Feststoffkomponente, einer organischen Aluminiumverbindung und einer organischen Silanverbindung besteht (EP-B 45 977, EP-A 171 200, US-A 4 857 613, US-A 5 288 824).

Zu den Polymerisaten von $C_2$-$C_8$-Alk-1-enen zählen die entsprechenden Homopolymerisate, Copolymerisate sowie sogenannte Block- oder Impactcopolymerisate. Letztere sind meist Gemische aus verschiedenen Homobzw. Copolymerisaten von $C_2$-$C_8$-Alk-1-enen, die sich vor allem durch eine gute Schlagzähigkeit auszeichnen. Sie werden gewöhnlich in sogenannten Reaktor-Kaskaden aus mindestens zwei hintereinandergeschalteten Reaktoren und oft in einem mindestens zweistufigen Prozeß hergestellt, wobei das in einem ersten Reaktor erhaltene Polymerisat in Anwesenheit von noch aktiven Ziegler-Natta-Katalysatorbestandteilen in einen zweiten Reaktor übergeführt wird, in dem diesem weitere Monomere hinzupolymerisiert werden.

Bei der exothermen Polymerisation von $C_2$-$C_8$-Alk-1-enen ist es erforderlich, die Polymerisationswärme kontinuierlich und kontrolliert abzuführen. Dies erfolgt üblicherweise dadurch, daß nicht umgesetzte Monomergemische aus der Reaktionszone entfernt, danach gekühlt und anschließend wieder in die Reaktionszone als gekühlte gasförmige Monomergemische eingeführt werden. Aus der EP-B 89691 ist dabei bekannt, die aus einem Wirbelbettreaktor entfernten nicht umgesetzten Monomere so weit abzukühlen, daß sie teilweise kondensieren. Das dadurch erhaltene Gemisch aus gasförmigen und flüssigen Monomeren wird dann wieder in den unteren Teil des Wirbelbettreaktors eingespeist.

Für eine stabile Reaktionsführung und eine gute Produktivität des eingesetzten Ziegler-Natta-Katalysatorsystems ist das Durchmischungsverhalten des im Reaktor vorhandenen Polymerbettes von entscheidender Bedeutung. Bei unzureichender Durchmischung treten im Reaktor häufig lokal überhitzte Zonen im Polymerbett auf, die Inhomogenitäten der Reaktortemperaturen zu Folge haben. Derartige Inhomogenitäten der Reaktortemperaturen führen u.a. zu einer verringerten Produktivität des eingesetzten Katalysators und zu einer verschlechterten Morphologie beim erhaltenen Polymerisat.

Der vorliegenden Erfindung lag daher die Aufgabe zugrunde, den geschilderten Nachteilen abzuhelfen und ein gegenüber den bisher bekannten Verfahren zur Polymerisation von $C_2$-$C_8$-Alk-1-enen nochmals verbessertes Verfahren zu entwickeln, welches u.a. durch eine erhöhte Produktivität des eingesetzten Katalysators gekennzeichnet ist und zu Polymerisaten mit einer verbesserten Morphologie führt.

Demgemäß wurde ein neues Verfahren zur Polymerisation von $C_2$-$C_8$-Alk-1-enen mittels eines Ziegler-Natta-Katalysatorsystems entwickelt, wobei aus der Gasphase heraus in wenigstens einer Reaktionszone bei Temperaturen von 40 bis 120°C und Drücken von 1 bis 100 bar polymerisiert wird, welches dadurch gekennzeichnet ist, daß Druck und Temperatur in der Reaktionszone so eingestellt werden, daß ein aus diesen Parametern gebildeter Betriebspunkt in einem Druck-Temperatur-Diagramm sich im Abstand von 0,2 bis 5,0 bar unterhalb der Taulinie des jeweiligen Reaktionsgemisches befindet, ab der eine Kondensation der $C_2$-$C_8$-Alk-1-ene eintritt.

Als $C_2$-$C_8$-Alk-1-ene können im erfindungsgemäßen Verfahren insbesondere Ethylen, Propylen, But-1-en, Pent-1-en, Hex-1-en, Hept-1-en oder Oct-1-en verwendet werden, wobei Ethylen, Propylen oder But-1-en bevorzugt eingesetzt werden. Das Verfahren kommt zur Herstellung von Homopolymerisaten der $C_2$-$C_8$-Alk-1-ene oder von Copolymerisaten der $C_2$-$C_8$-Alk-1-ene, bevorzugt mit bis zu 30 Gew. -% einpolymerisierter anderer Alk-1-ene mit bis zu 8 C-Atomen, in Betracht. Unter Copolymerisaten sollen hierbei sowohl statistische Copolymerisate als auch die sogenannten Block- oder Impactcopolymerisate verstanden werden.

In der Regel wird das erfindungsgemäße Verfahren in wenigstens einer Reaktionszone, häufig auch in zwei oder mehr Reaktionszonen durchgeführt, d.h. die Polymerisationsbedingungen unterscheiden sich in den Reaktionszonen soweit, daß Polymerisate mit unterschiedlichen Eigenschaften erzeugt werden. Für die Homopolymerisate oder statistischen Copolymerisate kann dies beispielsweise die Molmasse sein, d.h. zur Verbreiterung der Molmassenverteilung werden in den Reaktionszonen Polymerisate mit unterschiedlichen Molmassen hergestellt. Bevorzugt werden in den Reaktionszonen unterschiedliche Monomere bzw. Monomerzusammensetzungen polymerisiert. Dies führt dann üblicherweise zu den Block- oder Impactcopolymerisaten.

Besonders geeignet ist das erfindungsgemäße Verfahren zur Herstellung von Homopolymerisaten des Propylens oder von Copolymerisaten des Propylens mit bis zu 30 Gew. -% einpolymerisierter anderer Alk-1-ene mit bis zu 8 C-Atomen. Die Copolymerisate des Propylens sind hierbei statistische Copolymerisate oder Block- oder Impactcopolymerisate. Sofern die Copolymerisate des Propylens statistisch aufgebaut sind, enthalten sie im allgemeinen bis zu

15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Die Block- oder Impactcopolymerisate des Propylens sind Polymerisate, bei denen man in der ersten Stufe ein Propylenhomopolymerisat oder ein statistischen Copolymerisat des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymerisat mit Ethylengehalten von 15 bis 80 Gew.-%, wobei das Propylen-Ethylen-Copolymerisat zusätzlich noch weitere $C_4$-$C_8$-Alk-1-ene enthalten kann, hinzupolymerisiert. In der Regel wird soviel des Propylen-Ethylen-Copolymerisats hinzupolymerisiert, daß das in der zweiten Stufe erzeugte Copolymerisat im Endprodukt von 3 bis 60 Gew-% ausmacht.

Die Polymerisation erfolgt erfindungsgemäß mittels eines Ziegler-Natta-Katalysatorsystems. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Im erfindungsgemäßen Verfahren können aber auch Ziegler-Natta-Katalysatorsysteme auf der Basis von Metallocenverbindungen bzw. auf der Basis von polymerisationsaktiven Metallkomplexen eingesetzt werden.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält vorzugsweise mindestens eine halogenhaltige Magnesiumverbindung. Als Halogene werden hierbei Chlor, Brom, Jod oder Fluor verstanden, wobei Brom oder insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere Magnesiumdichlorid oder Magnesiumdibromid, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Bevorzugte Beispiele für halogenfreie Verbindungen des Magnesiums, die zur Herstellung der titanhaltige Feststoffkomponente a) geeignet sind, sind n-Butylethylmagnesium oder n-Butyloctylmagnesium. Bevorzugte Halogenierungsmittel sind Chlor oder Chlorwasserstoff. Es können jedoch auch die Titanhalogenide als Halogenierungsmittel dienen.

Darüber hinaus enthält die titanhaltige Feststoffkomponente a) zweckmäßigerweise Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II)

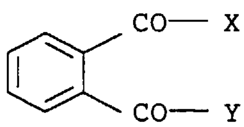

(II)

verwendet, wobei X und Y jeweils für ein Chlor- oder Bromatom oder einen $C_1$-$C_{10}$-Alkoxyrest oder gemeinsam für Sauerstoff in Anhydridfunktion stehen. Besonders bevorzugte Elektronendonorverbindungen sind Phthalsäureester, wobei X und Y einen $C_1$-$C_8$-Alkoxyrest bedeuten. Beispiele für vorzugsweise eingesetzte Phthalsäureester sind Diethylphthalat, Di-n-butylphthalat, Di-isobutylphthalat, Di-n-pentylphthalat, Di-n-hexylphthalat, Di-n-heptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1, 2-di-carbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise $C_1$-$C_{15}$-Alkanole oder $C_5$-$C_7$-Cycloalkanole, die ihrerseits eine oder mehrere $C_1$-$C_{10}$-Alkylgruppen tragen können, ferner $C_6$ -$C_{10}$-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) anorganische Oxide als Träger enthalten. Es wird in der Regel ein feinteiliges anorganisches Oxid als Träger verwendet, welches einen mittleren Teilchendurchmesser von 5 bis 200 µm, bevorzugt von 20 bis 70 µm, aufweist. Unter dem mittleren Teilchendurchmesser ist hierbei der volumenbezogene Mittelwert (Medianwert) der durch Coulter-Counter-Analyse bestimmten Korngrößenverteilung zu verstehen.

Vorzugsweise sind die Körner des feinteiligen anorganischen Oxids aus Primärpartikeln zusammengesetzt, die einen mittleren Teilchendurchmesser der Primärpartikel von 1 bis 20 µm, insbesondere von 1 bis 5 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich, die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms, z.B. des Software-Pakets Analysis der Fa. SIS.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 $cm^3$/g, bevorzugt von 1,0 bis 4,0 $cm^3$/g, und eine spezifische Oberfläche von 10 bis 1000 $m^2$/g, bevorzugt von 100 bis 500 $m^2$/g, auf, wobei hier die durch Quecksilber-Porosimetrie nach DIN 66133 und durch Stickstoff-Adsorption nach DIN 66131 bestimmten Werte zu verstehen sind.

Es ist auch möglich ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, des Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie $SiCl_4$, Chlorsilane oder Aluminiumalkyle zum Einsatz kommen. Der Wassergehalt geeigneter anorganischer Oxide beträgt von 0 bis 6 Gew.-%. Vorzugsweise wird ein anorganische Oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner $C_1$- bis $C_8$-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminium-verbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

$$R^1{}_nSi(OR^2)_{4-n} \qquad (I)$$

wobei $R^1$ gleich oder verschieden ist und eine $C_1$-$C_{20}$-Alkylgruppe, eine 5- bis 7-gliedrige Cycloalkylgruppe, die ihrerseits durch $C_1$-$C_{10}$-Alkyl substituiert sein kann, eine $C_6$-$C_{18}$-Arylgruppe oder eine $C_6$-$C_{18}$-Aryl-$C_1$-$C_{10}$-alkylgruppe bedeutet, $R^2$ gleich oder verschieden ist und eine $C_1$-$C_{20}$-Alkylgruppe bezeichnet und n für die ganzen Zahlen 1, 2 oder 3 steht. Besonders bevorzugt werden solche Verbindungen, in denen $R^1$ eine $C_1$-$C_8$-Alkylgruppe oder eine 5- bis 7-gliedrige Cycloalkylgruppe sowie $R^2$ eine $C_1$-$C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert. -butylsilan, Dimethoxyisobutyl-sek. -butylsilan und Dimethoxyisopropyl-sek. -butylsilan hervorzuheben.

Bevorzugt werden die Cokatalysatoren b) und c) in einer solchen Menge eingesetzt, daß das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt und das Molverhältnis zwischen der Aluminiumverbindung b) und der Elektronendonorverbindung c) von 1:1 bis 250:1, insbesondere von 10:1 bis 80:1, beträgt.

Die titanhaltige Feststoffkomponente a), die Aluminiumverbindung b) und die in der Regel verwendete Elektronendonorverbindung c) bilden zusammen das Ziegler-Natta-Katalysatorsystem. Die Katalysatorbestandteile b) und c) können zusammen mit der titanhaltigen Feststoffkomponente a) oder als Gemisch oder auch in beliebiger Reihenfolge einzeln in denn Polymerisationsreaktor eingebracht werden.

Im erfindungsgemäßen Verfahren können auch Ziegler-Natta-Katalysatorsysteme auf Basis von Metallocenverbindungen bzw. auf der Basis von polymerisationsaktiven Metallkomplexen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz im erfindungsgemäßen Verfahren liegen die Metallocenkomplexe im Katalysatorsystem in der Regel geträgert vor. Als Träger werden häufig anorganische Oxide eingesetzt. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine $\pi$-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine $C_1$-$C_{10}$-Alkylgruppe bevorzugt sind.

Bevorzugte Metallocene enthalten Zentralatome, die über zwei $\pi$-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren Cyclopentadienylgruppen zusätzlich durch cyclische Gruppen an zwei benachbarten C-Atomen substituiert sind.

Bevorzugte Metallocene sind auch solche, die nur eine Cyclopentadienylgruppe enthalten, die jedoch mit einen Rest substituiert ist, der auch an das Zentralatom gebunden ist.

Geeignete Metallocenverbindungen sind beispielsweise

Ethylenbis (indenyl) -zirkoniumdichlorid,
Ethylenbis (tetrahydroindenyl) -zirkoniumdichlorid,
Diphenylmethylen-9-fluorenylcyclopentadienylzirkoniumdichlorid,
Dimethylsilandiylbis (-3-tert.butyl-5-methylcyclopentadienyl)zirkoniumdichlorid,
Dimethylsilandiylbis (-2-methylindenyl) -zirkoniumdichlorid,
Dimethylsilandiylbis (-2-methylbenzindenyl) -zirkoniumdichlorid
Dimethylsilandiylbis (-2 -methyl -4 -phenylindenyl) zirkoniumdichlorid,
Dimethylsilandiylbis (-2 -methyl -4 -naphthylindenyl) zirkoniumdichlorid,
Dimethylsilandiylbis (-2-methyl-4-isopropylindenyl) zirkoniumdichlorid oder
Dimethylsilandiylbis(-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Das erfindungsgemäße Verfahren wird durch Polymerisation in wenigstens einer, häufig auch in zwei oder noch mehr hintereinandergeschalteten Reaktionszonen (Reaktorkaskade) in der Gasphase durchgeführt. Es können die üblichen, für die Polymerisation von $C_2$-$C_8$-Alk-1-enen verwendeten Reaktoren eingesetzt werden. Geeignete Reaktoren sind u.a. kontinuierlich betriebene Rührkessel, Schleifenreaktoren oder Wirbelbettreaktoren. Die Größe der Reaktoren ist für das erfindungsgemäße Verfahren nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im erfindungsgemäßen Verfahren im allgemeinen aus dem Polymerisat aus $C_2$-$C_8$-Alk-1-enen, das im jeweiligen Reaktor polymerisiert wird.

In einer besonders bevorzugten Ausführungsform wird das erfindungsgemäße Verfahren in einem Reaktor oder in einer Kaskade aus hintereinander geschalteten Reaktoren durchgeführt, in denen das pulverförmige Reaktionsbett durch einen vertikalen Rührer in Bewegung gehalten wird, wobei sich sogenannte frei tragende Wendelrührer besonders gut eignen. Derartige Rührer sind u.a. aus der EP-B 000 512 und der EP-B 031 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 038 478 beschrieben. Vorzugsweise besteht die Reaktorkaskade aus zwei hintereinander geschalteten, kesselförmigen, mit einem Rührer versehenen Reaktoren mit einem Rauminhalt von 0,1 bis 100 $m^3$, beispielsweise 12,5, 25, 50 oder 75 $m^3$.

Im erfindungsgemäßen Verfahren wird die Polymerisation unter üblichen Reaktionsbedingungen bei Temperaturen von 40 bis 120°C und Drücken von 1 bis 100 bar vorgenommen. Bevorzugt sind Temperaturen von 40 bis 100°C, insbesondere von 60 bis 90 °C und Drücke von 10 bis 50 bar, insbesondere von 20 bis 40 bar. Die Molmasse der gebildeten Polymerisate der $C_2$-$C_8$-Alk-1-ene kann durch die Zugabe von in der Polymerisationstechnik üblichen Reglern, beispielsweise von Wasserstoff, kontrolliert und eingestellt werden. Neben Reglern können auch sogenannte Regulatoren, d.h. Verbindungen, die die Katalysatoraktivität beeinflussen, oder auch Antistatika eingesetzt werden. Letztere verhindern die Belagbildung an der Reaktorwand durch elektrostatische Aufladung. Die Polymerisate der $C_2$-$C_8$-Alk-1-ene weisen in der Regel eine Schmelze-Fließrate (MFR) von 0,1 bis 3000 g/10 min., insbesondere von 0,2 bis 100 g/10 min. bei 230°C und unter einem Gewicht von 2,16 kg, auf. Die Schmelze-Fließrate entspricht dabei der Menge an Polymerisat, die innerhalb von 10 Minuten aus der nach ISO 1133 genormten Prüfvorrichtung bei einer Temperatur von 230°C und unter einem Gewicht von 2,15 kg ausgepreßt wird. Besonders bevorzugt sind dabei solche Polymerisate, deren Schmelze-Fließrate 0,1 bis 20 g/10 min, bei 230°C und unter einem Gewicht von 2,16 kg, beträgt.

Beim erfindungsgemäßen Verfahren liegen die mittleren Verweilzeiten der gasförmigen $C_2$-$C_8$-Alk-1-ene im Bereich von 0,1 bis 10 Stunden, bevorzugt im Bereich von 0,2 bis 5 Stunden und insbesondere im Bereich von 0,3 bis 4 Stunden.

Wesentlich ist beim erfindungsgemäßen Verfahren, daß der Druck und die Temperatur in den einzelnen Reaktionszonen so eingestellt werden, daß ein aus diesen beiden Parametern gebildeter Betriebspunkt in einem Druck-Temperatur-Diagramm sich im Abstand von 0,2 bis 5 bar unterhalb der Taulinie des jeweiligen Reaktionsgemisches befindet, ab der eine Kondensation der $C_2$-$C_8$-Alk-1-ene eintritt. Vorzugsweise liegt dabei der aus Druck und Temperatur gebildete Betriebspunkt im Druck-Temperatur-Diagramm im Abstand von 0,5 bis 2,5 bar unterhalb der Taulinie des jeweiligen Reaktionsgemisches.

Bei der Gasphasenpolymerisation bestimmt man die zur sicheren und kontrollierten Betriebsführung benötigten Betriebspunkte üblicherweise über die Parameter Druck und Temperatur. Diese ergeben ein sogenanntes Druck-Temperatur-Diagramm, wobei nach rechts (Abszisse) die Temperaturen und nach oben (Ordinate) die Drücke eingetragen werden. Derartige Druck-Temperatur-Diagramme stellen beispielsweise die Abbildungen 1 und 2 zu den erfindungsgemäßen Beispielen 1 und 2 dar. Für jedes einzelne gasförmige Reaktionsgemisch aus $C_2$-$C_8$-Alk-1-enen und gasförmigen Reglern, Regulatoren oder Antistatika ergibt sich jeweils eine eigene charakteristische Taulinie. Unterhalb dieser Taulinie liegen die einzelnen Bestandteile des Reaktionsgemisches im gasförmigen Zustand vor, oberhalb der Taulinie im flüssigen Zustand. Bewegt man sich daher bei einer vorgegebenen Temperatur innerhalb des Druck-Temperatur-Diagramms dadurch senkrecht nach oben, daß man den Druck bei konstanter Temperatur kontinuierlich erhöht, so beobachtet man bei Überschreiten der Taulinie Kondensation, d.h. Verflüssigung des Reaktionsgemisches.

Nach dem erfindungsgemäßen Verfahren wird für jedes gasförmige Reaktionsgemisch der jeweilige Betriebspunkt in einer Reaktionszone so gewählt, daß dieser sich 0,2 bis 5,0 bar, insbesondere 0,5 bis 2,5 bar unterhalb der Taulinie befindet. Das bedeutet, daß der aus Druck und Temperatur gebildete Betriebspunkt sich in dem Bereich des Druck-Temperatur-Diagramms befindet, in dem das Reaktionsgemisch gasförmig ist, aber in der Nähe der Taulinie, ab der Kondensation des Reaktionsgemisches eintritt.

Die Bestimmung der für jedes einzelne Reaktionsgemisch gültigen Taulinie kann durch eine Reihe von Versuchen in der Reaktionszone durchgeführt werden, bei denen bei gegebener Temperatur der Druck so lange erhöht wird, bis man die Kondensation des Reaktionsgemisches beobachtet. Auf diese Weise läßt sich für eine bestimmte Temperatur in der Reaktionszone der jeweilige Taudruck ermitteln.

Daneben ist es auch möglich, das Kondensationsverhalten des jeweiligen Reaktionsgemisches mit geeigneten mathematischen Modellen, beispielsweise einer Zustandsgleichung vom Typ der Virialkoeffizientenentwicklung nach dem Lee-Kesler-Plöcker-Modell oder nach Redlich-Kwong darzustellen. Das thermophysikalische Verhalten jedes Bestandteiles des Reaktionsgemisches wird durch seinen kritischen Druck (Pc), seine kritische Temperatur (Tc) und den sogenannten Pitzerfaktor (w) beschrieben, der für ca. 2000 Verbindungen bekannt ist oder aus Molekularinkrementen geschätzt werden kann. Aus den kritischen Parametern (Pc, Tc) und den jeweiligen Phasenkonzentrationen können mit zustandsgleichungs - spezifischen Mischungsregeln effektive Koeffizienten der jeweiligen Zustandsgleichung für die zu betrachtete Phase bestimmt werden (Knapp, Döring, Öllrich, Plöcker, "Vapor-Liquid Equilibria for mixtures of low boiling substances", Chemical Data Series, Vol. 6, 1982, Dechema, Frankfurt).

Auf die Lage der Taulinie wirken sich insbesondere die Verbindungen aus, die niedrige Dampfdrücke aufweisen, weil diese bevorzugt kondensieren.

Zur Berechnung des für jede Temperatur charakteristischen Taudrucks (P) ist für jede Komponente des Reaktionsgemisches für eine vorgegebene Temperatur folgendes Gleichungssystem numerisch zu lösen:

$$\ln f_i^{l} = \ln f_i^{v} , \quad i = 1, n \qquad (1a)$$

$$\sum_{i}^{n} (x_i - y_i) = O \qquad (1b)$$

$$k_i = P_{ci}/P \; e^{5.37(1+w_i)(1-T_{ci}/T)} \qquad (2)$$

Dabei bedeutet:

- $f_i^{l}$ : Fugazität der Komponente i im flüssigen Zustand
- $f_i^{v}$ : Fugazität der Komponente i im gasförmigen Zustand
- xi : Konzentration der Komponente i im flüssigen Zustand
- yi : Konzentration der Komponente i im gasförmigen Zustand
- ki : Phasenverteilungskoeffizient der Komponente i ($k_i = \frac{y_i}{x_i}$)
- Pc : kritischer Druck der Komponente i
- P : Taudruck
- Tci: kritischer Druck der Komponente i
- T : Tautemperatur
- wi : Pitzerfaktor

Nach Berechnung des für jede Temperatur charakteristischen Taudrucks (P) mit Hilfe des Gleichungssystems (1a), (1b) und (2) läßt sich für jedes Reaktionsgemisch ein entsprechendes Druck-Temperatur-Diagramm ermitteln, in dem eine Taulinie eingezeichnet ist. Nach dem erfindungsgemäßen Verfahren befinden sich die jeweils zu wählenden Betriebspunkte im Abstand von 0,2 bis 5 bar, insbesondere im Abstand von 0,5 bis 2,5 bar unterhalb der Taulinie.

Mit Hilfe des erfindungsgemäßen Verfahrens läßt sich durch ein verbessertes Monomerdiffusions-, Wärmediffusions - und Durchmischungsverhalten in den Reaktionszonen u.a. die Produktivität des verwendeten Katalysatorsystems deutlich steigern, wobei man bei der Polymerisation auch eine verringerte Brocken- und Belagbildungstendenz im Reaktor beobachtet. Durch die gesteigerte Temperaturhomogenität im Polymerbett werden sogenannte "hot spots", d.h. lokale Überhitzungen im Reaktorpolymerbett vermieden. Die erhaltenen Polymerisate von $C_2$-$C_8$-Alk-1-enen weisen u.a. eine verbesserte Morphologie auf, insbesondere verringerte Anteile an Feinststaub (Teilchengröße < 0,125 mm).

Mittels des erfindungsgemäßen Verfahrens bzw. der erfindungsgemäßen Vorrichtung können verschiedene Arten von Polymerisaten von $C_2$-$C_8$-Alk-1-enen hergestellt werden, beispielsweise Homopolymerisate, Copolymerisate oder Gemische aus derartigen Polymerisaten. Diese eignen sich vor allem zur Herstellung von Folien, Fasern oder Formkörpern.

Beispiele

Bei allen Versuchen wurde ein Ziegler-Natta-Katalysatorsystem eingesetzt, das eine nach folgendem Verfahren hergestellte titanhaltige Feststoffkomponente a) enthielt.

In einer ersten Stufe wurde ein feinteiliges Kieselgel, das einen mittleren Teilchendurchmesser von 30 µm, ein Porenvolumen von 1,5 $cm^3$/g und eine spezifische Oberfläche von 260 $m^2$/g aufwies, mit einer Lösung von n-Butyloctylmagnesium in n-Heptan versetzt, wobei pro Mol $SiO_2$ 0,3 mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang 125°C mit einer 10 vol. -%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew. -% Titantetrachlorid aufwies.

Die titanhaltige Feststoffkomponente $a_1$) enthielt

3,5 Gew.-% Ti
7,4 Gew. -% Mg
28,2 Gew. -% Cl.

Neben der titanhaltigen Feststoffkomponente a) wurden als Cokatalysatoren Triethylaluminium und Dimethoxyisobutylisopropylsilan verwendet analog der Lehre der US-A 4 857 613 und der US-A 5 288 824.

Beispiel 1

Die Polymerisation wurde in einem vertikal durchmischten Gasphasenreaktor mit einem Nutzvolumen von 800 l, ausgestattet mit einem freitragenden Wendelrührer, durchgeführt. Die Rührerleistungsaufnahme wurde in KW gemessen. Der Reaktor enthielt ein bewegtes Festbett aus feinteiligem Polymerisat. Der Reaktordruck betrug 31,5 bar. Als Katalysator wurde die titanhaltige Feststoffkomponente a) verwendet. Die Dosierung des Katalysators erfolgte zusammen mit dem zur Druckregelung zugesetzten Frisch-Propylen. Die zudosierte Katalysatormenge wurde so bemessen, daß der mittlere Ausstoß von 150 kg Polypropylen pro Stunde aufrecht erhalten wurde. Ebenfalls in den Reaktor zudosiert wurde Triethylaluminium (in Form einer 1 molaren Heptanlösung) in einer Menge von 450 mmol/h und 45 mmol/h Isobutylisopropyldimethoxysilan (in Form einer 0,25 molaren Heptanlösung). Zur Molmassenregelung wurde Wasserstoff hinzudosiert. Die Wasserstoffkonzentration im Reaktionsgas betrug 0,9 Vol-% und wurde gaschromatographisch ermittelt.

Die bei der Polymerisation entstehende Reaktionswärme wurde durch Verdampfungskühlung abgeführt. Zu diesem Zweck wurde ein Kreisgasstrom, der quantitativ das 4- bis 6-fach der umgesetzten Gasmenge ausmacht, im

Kreis geführt. Das verdampfte Propylen wurde nach Passieren der Reaktionszone am Kopf des Reaktors abgezogen, in einem Kreisgasfilter von mitgerissenen Polymerteilchen getrennt und gegen Zweitwasser in einem Wärmetauscher kondensiert. Das kondensierte Kreisgas wurde bis 40°C wieder in den Reaktor zurückgepumpt. Der im Kondensator nicht kondensierbare Wasserstoff wurde durch einen Ejektor abgesaugt und dem flüssigen Kreisgasstrom wieder zugeführt. Die Temperatur im Reaktor wurde über den Kreisgasdurchfluß geregelt und gemäß EP 0 038 478 gemessen. Die so ermittelte Reaktorführungstemperatur war 71,5°C. Der maximale Temperaturunterschied ($\Delta T_{max\text{-}min}$ = 0,8°C) im Polymerbett wurde aus der Differenz der Meßstelle mit der höchsten und der niedrigsten Temperaturmessung ermittelt. Durch kurzzeitiges Entspannen des Reaktor über ein Tauchrohr wurde sukzessive Polymergries aus dem Reaktor entfernt. Die Austragsfrequenz wurde über eine radiometrische Füllstandsmessung geregelt. Die Berechnung der Produktivität erfolgte aus dem Chlorgehalt der Polymeren nach der folgenden Formel: P = Cl-Gehalt des Katalysators/Cl-Gehalt des Produkts. Die Polymergriesmorphologie wurde durch Siebanalyse bestimmt, die Schmelzflußrate (MFR), bei 230°C und 2,16 kg nach ISO 1133, und die Viskosität (η) nach ISO 1628, in Dekalin bei 135°C.

Die verfahrenstechnischen Parameter und charakteristischen Produkteigenschaften gehen aus Tabelle 1 hervor.

Vergleichsbeispiel A

Die Polymerisation im kontinuierlichen 800 l Gasphasenreaktor wurde analog zu Beispiel 1 durchgeführt. Der Reaktordruck betrug 32 bar und die Reaktortemperatur war 80°C. Die Wasserstoffkonzentration im Reaktionsgas betrug 0,6 Vol-% und wurde gaschromatographisch ermittelt.

Die verfahrenstechnischen Parameter und charakteristischen Produkteigenschaften gehen aus Tabelle 1 hervor.

Tabelle 1

| | Beispiel 1 | Vergleichsbeispiel A |
|---|---|---|
| Reaktordruck [bar] | 31,5 | 32,0 |
| Reaktortemperatur [°C] | 71,5 | 80,0 |
| Rührerantrieb [KW] | 4,7 | 5,6 |
| $\Delta T_{max\text{-}min}$ [°C] | 0,8 | 2,7 |
| $H_2$ [Vol-%] | 0,9 | 0,6 |
| MFR [g/10 min] | 8,5 | 8,5 |
| [η] [dl/g] | 2,09 | 2,11 |
| Produktivität [gPP/gKat] | 21500 | 18500 |
| Polymergriesmorphologie: | | |
| <0,125 mm [%] | 2,3 | 6,1 |
| 0, 125-0,25 mm [%] | 7,1 | 5,8 |
| 0,25-0,5 mm [%] | 16,5 | 13,8 |
| 0,5-1,0 mm [%] | 29,9 | 41,2 |
| 1,0-2,0 mm [%] | 43,8 | 32,4 |
| >2,0 mm [%] | 0,4 | 0,7 |

Beispiel 2

Die Polymerisation im kontinuierlichen 800 l Gasphasenreaktor wurde analog zu Beispiel 1 durchgeführt. Der Reaktordruck betrug 30 bar und die Reaktortemperatur war 70°C. Die Wasserstoffkonzentration im Reaktionsgas betrug 1,2 Vol-% und wurde gaschromatographisch ermittelt. Zusätzlich wurde 2,6 Vol-% Ethylen in den Reaktor dosiert und die Ethylenkonzentration wurde ebenfalls gaschromatographisch ermittelt. Die stündliche Siebanalyse der ausgetragenen Polymergriespartikel des gebildeten Propylen/Ethylen-Copolymerisats ergab im Mittel 8,3 g Partikel mit

einem Durchmesser größer 5 mm pro 20 kg Polymergries. Nach 100 Stunden stabiler Gasphasenpolymerisation wurde der Reaktor entspannt. Die Innenbesichtigung ergab keine Brocken und Beläge im Reaktor.

Die verfahrenstechnischen Parameter und charakteristischen Produkteigenschaften gehen aus Tabelle 2 hervor.

Vergleichsbeispiel B

Die Polymerisation im kontinuierlichen 800 l Gasphasenreaktor wurde analog zu Beispiel 2 durchgeführt. Der Reaktordruck betrug 23 bar und die Reaktortemperatur war 80°C. Die Wasserstoffkonzentration im Reaktionsgas betrug 0,8 Vol-% und wurde gaschromatographisch ermittelt. Zusätzlich wurde 2,5 Vol-% Ethylen in den Reaktor dosiert und die Ethylenkonzentration wurde ebenfalls gaschromatographisch ermittelt. Die stündliche Siebanalyse der ausgetragenen Polymergriespartikel des gebildeten Propylen/Ethylen-Copolymerisats ergab im Mittel 475 g Partikel mit einem Durchmesser größer 5 mm pro 20 kg Polymergries. Nach 100 Stunden stabiler Gasphasenpolymerisation wurde der Reaktor entspannt und die Innenbesichtigung ergab 3,8 kg Brocken und Belagsbildung an der Rührenwendel.

Die verfahrenstechnischen Parameter und charakteristischen Produkteigenschaften gehen aus Tabelle 2 hervor.

Tabelle 2

| | Beispiel 2 | Vergleichsbeispiel B |
|---|---|---|
| Reaktordruck [bar] | 30 | 23,0 |
| Reaktortemperatur[°C] | 70,0 | 80,0 |
| $H_2$ [Vol-%] | 1,2 | 0,8 |
| $C_2$ [Vol-%] | 2,6 | 2,5 |
| MFR [g/10 min] | 2,2 | 2,2 |
| $C_2$ [Gew.-%] | 3,5 | 3,5 |
| [η] [dl/g] | 2,79 | 2,75 |
| Produktivität [gPP/gKat] | 23000 | 17500 |
| Polymergriesmorphologie: | | |
| <0,125 mm [%] | 0,3 | 2,4 |
| 0,125-0,25 mm [%] | 1,3 | 6,3 |
| 0,25-0,5 mm [%] | 4,1 | 15,0 |
| 0,5-1,0 mm [%] | 16,8 | 31,9 |
| 1,0-2,0 mm [%] | 53,2 | 34,4 |
| >2,0 mm [%] | 24,3 | 10,0 |
| Anzahl der Partikel mit einem Teilchendurchmesser >5,0 mm in Gramm pro 20 kg Polymer | 8,3 | 475,0 |

Druck-Temperatur-Diagramme mit eingetragenen Taulinien und Betriebslinien für die Beispiele 1 und 2 und die Vergleichsbeispiele A und B sind in den beiden nachfolgenden Diagrammen 1 und 2 wiedergegeben. Dabei sind jeweils der Druck (p) in bar und die Temperatur (T) in °C angegeben.

**Patentansprüche**

1. Verfahren zur Polymerisation von $C_2$-$C_8$-Alk-1-enen mittels eines Ziegler-Natta-Katalysatorsystems, wobei aus der Gasphase heraus in wenigstens einer Reaktionszone bei Temperaturen von 40 bis 120°C und Drücken von 1 bis 100 bar polymerisiert wird, dadurch gekennzeichnet, daß Druck und Temperatur in der Reaktionszone so eingestellt werden, daß ein aus diesen Parametern gebildeter Betriebspunkt in einem Druck-Temperatur-Diagramm sich im Abstand von 0,2 bis 5,0 bar unterhalb der Taulinie des jeweiligen Reaktionsgemisches befindet, ab der eine

Kondensation der $C_2$-$C_8$-Alk-1-ene eintritt.

2. Verfahren nach Anspruch 1, dadurch gekennzeichnet, daß sich der aus Druck und Temperatur gebildete Betriebspunkt im Druck-Temperatur-Diagramm im Abstand von 0,5 bis 2,5 bar unterhalb der Taulinie des jeweiligen Reaktionsgemisches befindet.

3. Verfahren nach den Ansprüchen 1 oder 2, dadurch gekennzeichnet, daß es sich bei der Reaktionszone um einen Wirbelbettreaktor handelt.

4. Verfahren nach den Ansprüchen 1 oder 2, dadurch gekennzeichnet, daß es sich bei der Reaktionszone um einen gerührten Pulverbettreaktor handelt.

5. Verfahren nach den Ansprüchen 1 bis 4, dadurch gekennzeichnet, daß es zur Herstellung von Homopolymerisaten des Propylens verwendet wird.

6. Verfahren nach den Ansprüchen 1 bis 4, dadurch gekennzeichnet, daß es zur Herstellung von Copolymerisaten des Propylens mit untergeordneten Anteilen anderer $C_2$-$C_8$-Alk-1-ene verwendet wird.

7. Verfahren nach den Ansprüchen 1 bis 6, dadurch gekennzeichnet, daß die Polymerisation bei Temperaturen von 40 bis 100°C durchgeführt wird.

8. Verfahren nach den Ansprüchen 1 bis 7, dadurch gekennzeichnet, daß die Polymerisation bei Drücken von 10 bis 50 bar durchgeführt wird.

9. Verfahren nach den Ansprüchen 1 bis 8, dadurch gekennzeichnet, daß die Molmasse der gebildeten Polymerisate der $C_2$-$C_8$-Alk-1-ene durch Wasserstoff als Regler eingestellt wird.

10. Verfahren nach den Ansprüchen 1 bis 9, dadurch gekennzeichnet, daß die Polymerisation der $C_2$-$C_8$-Alk-1-ene in zwei hintereinander geschalteten Reaktoren erfolgt.

11. Verfahren nach den Ansprüchen 1 bis 10, dadurch gekennzeichnet, daß die Polymerisation der $C_2$-$C_8$-Alk-1-ene mittels eines Ziegler-Natta-Katalysatorsystems durchgeführt wird, welches neben einer titanhaltigen Feststoffkomponente a) noch Cokatalysatoren in Form von organischen Aluminiumverbindungen b) und Elektronendonorverbindungen c) aufweist.

12. Verfahren nach den Ansprüchen 1 bis 10, dadurch gekennzeichnet, daß die Polymerisation der $C_2$-$C_8$-Alk-1-ene mittels eines Ziegler-Natta-Katalysatorsystems auf der Basis von Metallocenverbindungen oder von polymerisationsaktiven Metallkomplexen durchgeführt wird.

FIG.1

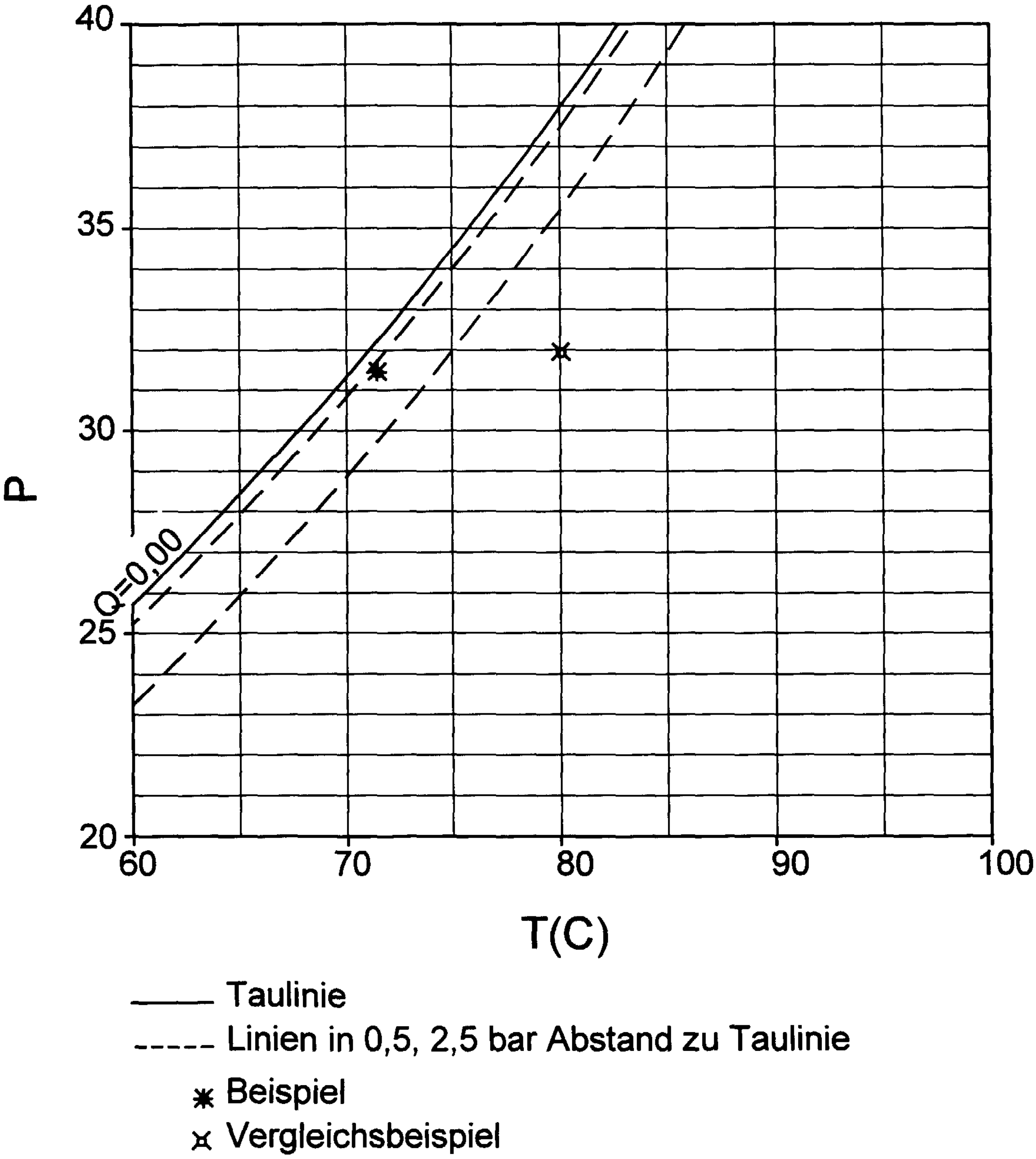
40
35
30
25
20
P
60
70
80
90
100
T(C)
Q=0,00
Taulinie
Linien in 0,5, 2,5 bar Abstand zu Taulinie
Beispiel
Vergleichsbeispiel

FIG.2

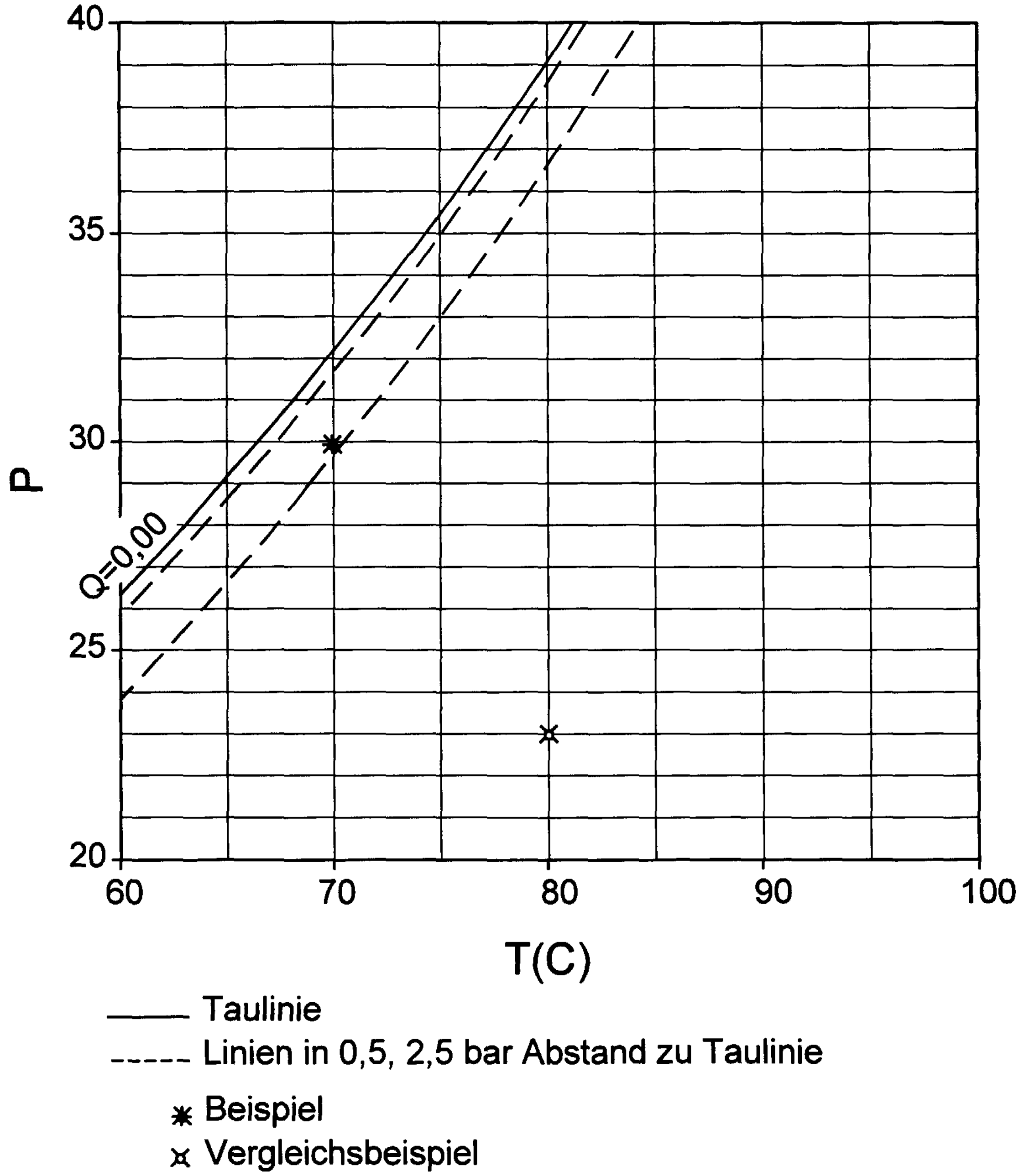
40
35
30
25
20
P
Q=0,00
60
70
80
90
100
T(C)
Taulinie
Linien in 0,5, 2,5 bar Abstand zu Taulinie
Beispiel
Vergleichsbeispiel